Europäisches Patentamt

European Patent Office

Office européen des brevets

(11) Veröffentlichungsnummer : **0 185 145**
**B1**

# (12) EUROPÄISCHE PATENTSCHRIFT

(45) Veröffentlichungstag der Patentschrift :
19.10.88

(21) Anmeldenummer : 85111169.0

(22) Anmeldetag : 04.09.85

(51) Int. Cl.⁴ : **B 23 K 26/00**

(54) Verfahren zur Herstellung von geschweissten Bauteilen für Abgasanlagen.

(30) Priorität : 19.12.84 DE 3446280

(43) Veröffentlichungstag der Anmeldung :
25.06.86 Patentblatt 86/26

(45) Bekanntmachung des Hinweises auf die Patenterteilung : 19.10.88 Patentblatt 88/42

(84) Benannte Vertragsstaaten :
AT BE CH DE FR GB IT LI LU NL SE

(56) Entgegenhaltungen :
EP-A- 0 115 578
DE-A- 2 448 713
US-A- 4 315 132

(73) Patentinhaber : Hoesch Aktiengesellschaft
Eberhardstrasse 12
D-4600 Dortmund 1 (DE)

(72) Erfinder : Gerber, Manfred, Dipl.-Ing.
Jägerallee 67
D-4700 Hamm 1 (DE)
Erfinder : Gross, Heinz, Dipl.-Ing.
Reichsmarkstrasse 142
D-4600 Hamm 1 (DE)
Erfinder : Krebs, Rolf, Dipl.-Ing.
Karl-Mosterts-Strasse 5
D-4700 Hamm 1 (DE)
Erfinder : Retzlaff, Friedhelm
Wilhelm-Busch-Ring 8
D-4708 Kamen-Methler (DE)

EP 0 185 145 B1

## Beschreibung

Die Erfindung betrifft die Verwendung des Laser-Schweißens für und ein Verfahren zur Herstellung von längsnahtgeschweißten rohrförmigen Bauteilen für Abgasanlagen insbesondere für PKW mit Abgaskatalysator aus austenitischem oder ferritischem Cr-Stahl.

Aus der Praxis ist bekannt, rohrförmige Bauteile für einen derartigen Verwendungszweck, insbesondere die für Zunder und Korrosion anfälligen Abgasrohre bis zum Vor- bzw. Hauptschalldämpfer aus dem für diese Zwecke relativ preiswerten Werkstoff X5CrTi12 zu fertigen. Dabei werden die Rohrteile längsnahtgeschweißt durch WIG-Schweißen oder Hochfrequenz-Widerstands-Preßschweißen (HF). Beide Verfahren haben entscheidende Nachteile.

Nach dem Schweißen muß die Nahtüberhöhung aufgrund der nachfolgenden Rohrumformprozesse, wie Kaltbiegen, Bördeln, Aufweiten bis auf ein die Umformung nicht beeinträchtigendes Maß durch Schaben oder Schleifen entfernt werden. Bei Wanddicken von 0,8-2,5 mm und Rohrdurchmessern von 30-65 mm kann es technische Probleme beim HF-Schweißen durch Innennahtentgratung oder das unabsichtliche zu tiefe Entgraten geben, was zu Kerbrissen führt. Des weiteren können bei der HF-Schweißung die entstehenden Oxyde nicht restlos entfernt und eine werkstoffbedingte sporadische Kaltverschweißung kaum vermieden werden. Derartige Fehler in Nahtmitte führen zum Aufbrechen der Naht nach der Weiterverarbeitung der Rohre, wie z. B. Aufweiten oder räumliches Biegen, was zu erheblichem Ausschuß führt. Ähnliche Probleme entstehen bei WIG-geschweißten Rohren durch die in der Nahtzone besonders an der Außenseite vorhandene grobkörnige, breite Schweißgutstruktur, die nur einen geringen Umformungsgrad bei der Weiterverarbeitung zuläßt. An der Innenseite ist die Durchschweißung schwierig zu gewährleisten. Durch diesen Außen-Innen-Effekt ist eine geringere Umformung bei der Weiterverarbeitung der Rohre gegeben.

Im Zuge der Entwicklung von z. B. mit Keramik ausgekleideten Motoren mit heißeren Abgasen ist es sinnvoll, die Abgasanlage aus zweischichtigen Werkstoffen herzustellen, die z. B. eine äußere Schicht aus ferritischem und eine innere Schicht aus austenitischem Material haben.

Von daher lag der Erfindung die Aufgabe zugrunde, ein Fügeverfahren für rohrförmige Bauteile aus Werkstoff X5CrTi12 und anderen geeigneten Werkstoffen vorzuschlagen, das die Vorteile bekannter Fügeverfahren — wirtschaftliche Schweißgeschwindigkeit der HF-Schweißung, gute Schmelzschweißung von Edelstählen durch das WIG-Verfahren — nutzt und die Möglichkeit eröffnet, die Bauteile anschließend mit hoher spanloser Umformung weiterzuverarbeiten bei Vermeidung von Schweiß-Zusatzwerkstoffen oder weiteren teuren Legierungen.

Die Aufgabe wird gelöst mit den kennzeichnenden Merkmalen des Anspruches 1. Eine Weiterbildung der Erfindung ist in dem Unteranspruch erfaßt.

Die Lösung der Aufgabe beruht auf dem überraschenden Befund, daß für das Umformverhalten des Bauteiles die Nahtbreite und Nahtreinheit neben der allgemeinen Schweißnahtgüte z. B. der vollkommenen Durchschweißung und der Nahtstruktur überragende Parameter sind.

Dies läßt sich durch Strahlschweißen mit bestimmter Geschwindigkeit erreichen ; dabei schied Elektronenstrahlschweißen wegen der Probleme Vakuum oder zumindest Halb-Vakuum zu erzeugen für ein kontinuierliches Schweißen bei hoher Geschwindigkeit aus.

Aus der EP-A3-00 94 346 ist das diskontinuierliche Laserschweißen von Dosenkörpern bekannt. Hinweise, wie bei kontinuierlichem Betrieb die Nahtgeometrie, Stauchdruck o.ä., insbesondere bei dem vorliegenden Werkstoff zu gestalten sind, fehlen.

Das praktisch drucklose Verschweißen der Bandkanten in Kombination mit hoher Schweißgeschwindigkeit führt zu sehr kleinen Nahtüberhöhungen, Nahtbreiten und sehr guter Durchschweißung bei entsprechender Variation der Lage des Fokus-Punktes.

Dies hat den zusätzlich erwünschten Effekt, daß keine Entgratung erforderlich ist und Materialverluste von 1-2 % vermieden werden.

Im Zuge der Entwicklung von z. B. mit Keramik ausgekleideten Motoren mit heißeren Abgasen ist es sinnvoll, die Abgasanlage aus zweischichtigen Werkstoffen herzustellen, die z. B. eine äußere Schicht aus ferritischem und eine innere Schicht aus austenitischem Material haben.

Erfindungsgemäß geschweißte Bauteile lassen sich problemlos umformen, ohne daß die Schweißnaht die Umformung behindert.

In einem Ausführungsbeispiel und anhand von Schliffbildern soll ein Anwendungsfall der Erfindung näher erläutert werden :

Schliffbild 1 zeigt eine WIG-Naht, geschweißt mit Zusatzwerkstoff, Rohrwanddicke 1,5 mm, Nahtbreite ca. 4 mm, Nahtüberhöhung außen 0,3 mm gemäß Stand der Technik. In der wärmebeeinflußten Nahtzone ist deutlich eine grobe Konstruktur erkennbar. Auf der Innenseite liegt eine unvollständige Durchschweißung verbunden mit Kerben vor, die insbesondere das Aufweiten der Rohre nachteilig beeinflußt.

Schliffbild 2 zeigt gemäß Stand der Technik eine HF-Naht, außen geschabt, Rohrwanddicke 1,4 mm. Die Außennaht ist leicht unterschabt, die Innennahtüberhöhung führt zu Fehlern nach der Umformung (Kerbrisse neben der Naht).

Schliffbild 3 zeigt eine erfindungsgemäße lasergeschweißte Naht an einem wie folgt herstellbaren Rohr :

Verwendet wird ein Stahlband mit einer Dicke von 1,5 mm und einer Breite von 142 mm aus dem Werkstoff DIN 1.4512 mit 0,03 % C ; 0,54 % Si ;

0,32 % Mn ; 11,3 % Cr, 0,28 % Ti, 0,022 % P ; 0,008 % S ; 0,15 % Ni ; Rest Fe und unvermeidliche Verunreinigungen.

Nach kontinuierlichem Einformen zum Schlitzrohr wird es unter einem $CO_2$-Laser-Schweißgerät durchgeführt und zu einem Rohr von 45 mm Durchmesser verschweißt. Der Stauchdruck vor dem Schweißpunkt ist auf ca. 0,08 N/mm² eingestellt. Die Schweißgeschwindigkeit beträgt 8 m/min ; die Nahtbreite 0,9 mm ; die Nahtüberhöhung außen 0,1 mm (Schliffbild 3).

Das Rohr wird mit einer Emulsion gekühlt und in Einzellängen von 8 m zerteilt. Ein Rohrabschnitt wurde aufgeweitet und erreichte eine Aufweitung von 90 %.

Ein weiteres Rohr wurde zu einem zweifach gebogenen Krümmer verarbeitet ; das Biegen erfolgte in zwei Ebenen senkrecht zur Rohrachse um jeweils 180°, der Krümmungsradius betrug 1,5 × Rohrdurchmesser.

Bei allen Umformarbeiten war kein Ausfall durch Schweißnahtrisse oder Poren festzustellen.

Die erfindungsgemäß hergestellten Rohre können vorteilhaft zu Abgasrohren für PKW weiterverarbeitet werden.

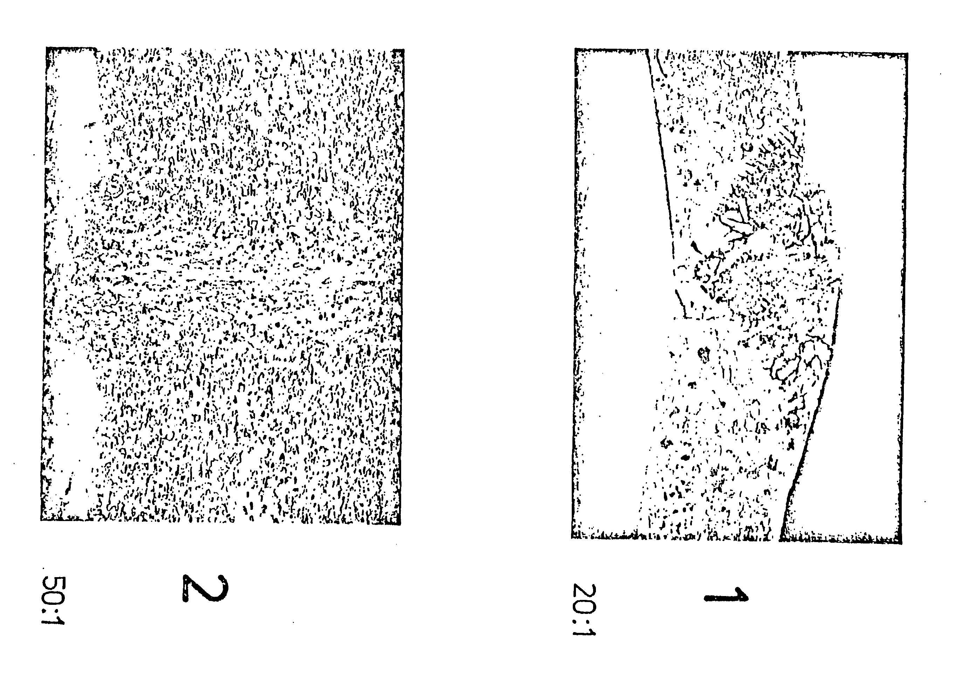

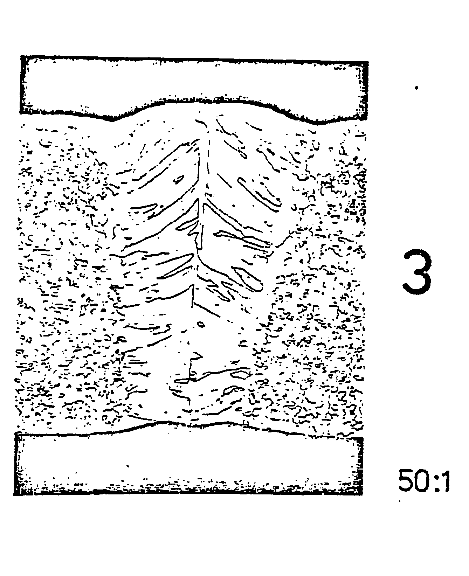

## Patentansprüche

1. Verfahren zur Herstellung von längsnahtgeschweißten rohrförmigen Bauteilen für Abgasanlagen aus austenitischem oder ferritischem Tistabilisierten Cr-Stahl, insbesondere aus X5CrTi12 mit einem aus Band eingeformten Schlitzrohr, dadurch gekennzeichnet, daß dieses kontinuierlich lasergeschweißt wird mit einer Schweißgeschwindigkeit größer als 5 m/min, mit einer eingestellten Nahtbreite kleiner als 0,8 und einer Nahtüberhöhung von kleiner als 0,2 mal der Banddicke, die Bandkanten vor dem Schweißpunkt mit max. 0,1 N/mm² zusammengepreßt werden und daß nach dem Verschweißen Teile des fertigen Rohres, in denen die Schweißnaht mit enthalten ist, in kaltem Zustand um mehr als 40 % ihrer ursprünglichen Abmessungen gedehnt oder gestaucht werden.

2. Verfahren nach Anspruch 1, dadurch gekennzeichnet, daß das fertige Rohr nach dem Schweißen in kaltem Zustand so stark gebogen wird, daß die mittleren Krümmungsradien unterhalb des 2fachen Rohrdurchmessers liegen.

## Claims

1. Process of the production of longitudinally seam welded tubular constructional components for waste gas installations, the components being made from austenitic or ferritic Ti-stabilised Cr-steel, particularly from X5CrTi12, and comprising a split tube formed from strip, characterised in that the component is continuously laser welded with a welding speed greater than 5 m/min, a weld width set at less than 0.8 times the strip thickness and a weld protuberance of less than 0.2 times the strip thickness, the strip edges are pressed together in advance of the welding point at a maximum pressure of 0.1 N/mm² and, after welding, parts of the finished tube, in which the weld seam is incorporated, are expanded or compressed in the cold state by more than 40 % of their original dimensions.

2. Process according to claim 1, characterised in that the finished tube, after welding, is so strongly bent in the cold state that the mean radius of curvature is less than twice the tube diameter.

## Revendications

1. Procédé de fabrication d'éléments de construction tubulaires à soudure longitudinale, destinés à des installations de gaz d'échappement et réalisés en acier austénitique ou ferritique au chrome stabilisé au titane, en particulier en X5Cr-Ti12, avec un tube fendu, formé à partir d'une bande, caractérisé en ce que celui-ci est soudé en continu au laser avec une vitesse de soudage supérieure à 5 m/min, avec une largeur de cordon de soudure inférieure à 0,8 fois l'épaisseur de la bande et avec une surépaisseur de cordon inférieure à 0,2 fois cette épaisseur, les bords de la bande étant pressés l'un contre l'autre avant le point de soudage, avec une pression maximale de 0,1 N/mm², et en ce que des parties du tube fini, dans lesquelles est contenu le cordon de soudure, subissent après le soudage un allongement ou un refoulement à froid dépassant 40 % de leurs dimensions initiales.

2. Procédé selon la revendication 1, caractérisé en ce que le tube fini est si fortement cintré à froid après soudage, que les rayons de courbure moyens sont inférieurs à 2 fois le diamètre du tube.

1

20:1

2

50:1

3

50:1